# EUROPÄISCHE PATENTSCHRIFT

(11) **EP 4 261 446 B1**
(45) Veröffentlichungstag und Bekanntmachung des Hinweises auf die Patenterteilung: **11.09.2024**
(21) Anmeldenummer: 23167121.5
(22) Anmeldetag: 06.04.2023
(51) Int. Cl.: F16L 3/24, F16B 7/18, F16B 37/04

(54) **BEFESTIGUNGSVORRICHTUNG, ANORDNUNG MIT EINER BEFESTIGUNGSVORRICHTUNG UND VERFAHREN ZUM HERSTELLEN EINER BEFESTIGUNGSVORRICHTUNG**
FASTENING DEVICE, ARRANGEMENT HAVING A FASTENING DEVICE, AND METHOD FOR PRODUCING A FASTENING DEVICE
DISPOSITIF DE FIXATION, ENSEMBLE COMPRENANT UN DISPOSITIF DE FIXATION ET PROCÉDÉ DE FABRICATION D'UN DISPOSITIF DE FIXATION

(30) Priorität: 13.04.2022 DE 102022203736
(43) Veröffentlichungstag der Anmeldung: 18.10.2023
(73) Patentinhaber: Adolf Würth GmbH & Co. KG, 74653 Künzelsau (DE); Würth International AG, 7000 Chur (CH)
(72) Erfinder: Kollmar, Frank, 74245 Löwenstein (DE); Sailer, Thomas, 74229 Oedheim (DE)
(74) Vertreter: Patentanwälte Ruff, Wilhelm, Beier, Dauster & Partner mbB

(56) Entgegenhaltungen:
- EP-A1- 3 647 609
- WO-A1-2018/153929
- DE-A1- 102015 118 314
- US-A- 4 934 886
- US-B2- 9 732 887

## Beschreibung

Die Erfindung betrifft eine Befestigungsvorrichtung für Halteschienen mit wenigstens abschnittsweise C-artigem Querschnitt, mit einer Schiebemutter, einer Haltescheibe und einem Positionierbauteil, wobei das Positionierbauteil die Schiebemutter wenigstens abschnittsweise umgreift und das Positionierbauteil die Haltescheibe in einem Abstand von der Schiebemutter hält.

Aus der europäischen Patentschrift EP 2 980 425 B1 ist eine Befestigungsvorrichtung für Halteschienen mit C-artigem Querschnitt bekannt. Die Befestigungsvorrichtung weist eine Schiebemutter zum Einsetzen in die Halteschiene mit C-artigem Querschnitt auf und eine Haltescheibe, die auf die Öffnung der Halteschiene aufgesetzt wird. Die Haltescheibe und die Schiebemutter werden relativ zueinander mittels eines Positionierbauteils gehalten. Die Haltescheibe weist eine zentrale Durchgangsöffnung auf, in die beispielsweise eine Schraube eingedreht wird. Das Gewinde der Schraube greift dann in eine Gewindeöffnung der Schiebemutter ein. Wird die Schraube dann festgezogen, wird die Schiebemutter von der Innenseite der Halteschiene her gegen die die Öffnung der Halteschiene berandenden Abschnitte gedrückt. Die Haltescheibe wird von der Gegenseite her gegen die die Öffnung begrenzenden Abschnitte der Halteschiene gedrückt. Die Befestigungsmutter kann durch Lösen der Schraube in einfacher Weise entlang der Halteschiene verschoben werden. Zum Einsetzen der Befestigungsvorrichtung wird die Schiebemutter parallel zur Öffnung der Halteschiene ausgerichtet, in den Innenraum der Halteschiene eingesetzt und dann wird die Schiebemutter zusammen mit dem Positionierbauteil um 90° gedreht, so dass die Schiebemutter von der Innenseite her die die Öffnung der Halteschiene berandenden Abschnitte hintergreift. Die Befestigungsvorrichtungen können auch beispielsweise zum Befestigen von Rohrschellen oder dergleichen an Halteschienen verwendet werden.

Das Dokument WO 2018/153929A offenbart eine Befestigungsvorrichtung zum Verklemmen in einer Profilschiene durch Eindrehen um eine Drehachse, die einen im Wesentlichen C-förmigen Querschnitt und einen Längsschlitz mit gegenüberliegenden Schlitzflanken aufweist, wobei die Befestigungsvorrichtung eine Deckplatte, deren Länge und/oder Breite größer ist als die Breite des Längsschlitzes der Profilschiene, eine Gewindeplatte, die eine Gewindebohrung aufweist und eine Länge größer als die Breite des Längsschlitzes und eine Breite kleiner als die Breite des Längsschlitzes besitzt, und eine an der Deckplatte angeordneten Haltevorrichtung für die Gewindeplatte zum Einstecken in die Profilschiene aufweist, wobei zwischen der Deckplatte und der Gewindeplatte bezüglich der Drehachse diametral gegenüberliegende Federanordnungen zur Anlage an den Schlitzflanken des Längsschlitzes vorgesehen sind. Die Federanordnungen weisen jeweils zwei sich von der Haltevorrichtung bezüglich der Drehachse radial nach außen weg erstreckende, gekrümmte Federlaschen auf, die sich jeweils bezüglich einer Umfangsrichtung um die Haltevorrichtung in entgegengesetzte Richtungen erstrecken. Mit der Erfindung soll eine Befestigungsvorrichtung, eine Anordnung mit einer Befestigungsvorrichtung und ein Verfahren zum Herstellen einer Befestigungsvorrichtung verbessert werden, insbesondere hinsichtlich der Herstellungskosten einer solchen Befestigungsvorrichtung.

Erfindungsgemäß ist hierzu eine Befestigungsvorrichtung mit den Merkmalen von Anspruch 1, eine Anordnung mit den Merkmalen von Anspruch 7 und ein Verfahren mit den Merkmalen von Anspruch 11 vorgesehen. Vorteilhafte Weiterbildungen der Erfindung finden sich in den Unteransprüchen.

Eine Befestigungsvorrichtung für Halteschienen mit wenigstens abschnittsweise C-artigem Querschnitt weist eine Schiebemutter, eine Haltescheibe und ein Positionierbauteil auf, wobei das Positionierbauteil die Schiebemutter wenigstens abschnittsweise umgreift und das Positionierbauteil die Haltescheibe in einem Abstand von der Schiebemutter hält. Das Positionierbauteil weist eine Basis auf, die gegenüber einer Unterseite der Schiebemutter angeordnet ist. Das Positionierbauteil weist ein erstes Seitenteil und ein zweites Seitenteil auf, wobei das erste Seitenteil und das zweite Seitenteil mit der Basis verbunden sind und wenigstens abschnittsweise an gegenüberliegenden Seitenflächen der Schiebemutter anliegen. Das Positionierbauteil weist ein Oberteil auf, das gegenüber einer Oberseite der Schiebemutter angeordnet ist, wobei das Oberteil wenigstens einen ersten Abschnitt und einen zweiten Abschnitt aufweist, wobei der erste Abschnitt mit dem ersten Seitenteil und der zweite Abschnitt mit dem zweiten Seitenteil verbunden ist und wobei der erste Abschnitt und der zweite Abschnitt mittels Rastmitteln miteinander verbunden sind.

Bei einer solchen Ausgestaltung der Befestigungsvorrichtung kann das Positionierbauteil in sehr einfacher Weise um die Schiebemutter herumgelegt werden, beispielsweise gebogen werden, und das Positionierbauteil wird dann dadurch fixiert, dass der erste Abschnitt des Oberteils und der zweite Abschnitt des Oberteils mittels der Rastmittel miteinander verbunden werden. In sehr einfacher Weise kann dadurch die Schiebemutter relativ zum Positionierbauteil fixiert werden. Dies kann werkzeuglos geschehen und kann beispielsweise auch vollautomatisch vorgenommen werden. Das Positionierbauteil ist hierzu so ausgebildet, dass es entweder vollständig aus elastisch oder plastisch biegbarem Kunststoffmaterial besteht oder dass an den vorgesehenen Biegestellen das Positionierbauteil so ausgebildet ist, dass es gebogen werden kann. Dies kann beispielsweise durch Aussparungen oder Materialschwächungen erreicht werden.

In Weiterbildung der Erfindung sind die Basis und das erste Seitenteil mittels eines ersten Filmscharniers miteinander verbunden und die Basis und das zweite Seitenteil sind mittels eines zweiten Filmscharniers miteinander verbunden.

Mittels eines Filmscharniers kann eine definierte Biegestelle geschaffen werden und dennoch kann das Positionierbauteil in sehr einfacher Weise, beispielsweise als Kunststoffspritzgussteil, ohne komplizierte Hinterschnitte oder dergleichen hergestellt werden.

In Weiterbildung der Erfindung weist die Basis auf ihrer der Schiebemutter zugewandten Innenseite eine kegelstumpfartige Erhebung auf, die abschnittsweise in eine Durchgangsöffnung in der Schiebemutter eingreift.

Mittels der kegelstumpfartigen Erhebung kann die Schiebemutter relativ zum Positionierbauteil in Position gehalten werden und die Schiebemutter kann auch im Abstand von der Basis gehalten werden. Beispielsweise können Schiebemuttern mit unterschiedlich großer Durchgangsöffnung, beispielsweise Schiebemuttern für M6-Schrauben bzw. Schiebemuttern für M16-Schrauben, in unterschiedlichem Abstand zur Basis gehalten werden. Schiebemuttern mit kleiner Durchgangsöffnung, beispielsweise für M6-Schrauben, können wesentlich dünner ausgeführt werden als Schiebemuttern mit großen Durchgangsöffnungen, beispielsweise für M16-Schrauben. Mittels der kegelstumpfartigen Erhebung können die Schiebemuttern unabhängig von ihrer Dicke relativ zum Positionierbauteil so positioniert werden, dass sie nach dem Einsetzen in die Halteschienen mit C-artigem Querschnitt immer unmittelbar unter den Abschnitten der Halteschiene angeordnet sind, die die Öffnung der Halteschiene begrenzen. Durch wenige Umdrehungen einer Schraube, die in die Schiebemutter eingeschraubt wird, kann dann die Befestigungsvorrichtung relativ zur Halteschiene fixiert und gesichert werden.

Die Erhebung, die sich in die Durchgangsöffnung hineinerstreckt, kann beim Eindrehen einer Schraube in die Schiebemutter aus der Durchgangsöffnung verdrängt werden. Hierzu ist die Erhebung vergleichsweise elastisch oder leicht biegbar oder abbrechbar ausgebildet.

In Weiterbildung der Erfindung weist die Erhebung eine konkave Außenkontur auf.

Auf diese Weise kann sichergestellt werden, dass sich die Erhebung zumindest mit ihrem oberen Ende immer ein Stück weit in die Durchgangsöffnung der Schiebemutter hineinerstreckt und diese dadurch sicher relativ zum Positionierbauteil positioniert.

In Weiterbildung der Erfindung ist die Erhebung mit einer Mittelöffnung versehen.

Dies erleichtert das Eindrehen einer Schraube in die Durchgangsöffnung der Schiebemutter und das Verdrängen zumindest eines Abschnitts der Erhebung aus der Mittelöffnung.

In Weiterbildung der Erfindung besteht die Erhebung aus mehreren Materialstreifen, die jeweils mit der Basis verbunden sind und die mittels Schlitzen wenigstens abschnittsweise voneinander getrennt sind.

Auf diese Weise kann die Erhebung in sich elastisch ausgeführt werden und die Materialstreifen können auch eine gewisse Federwirkung aufweisen. Vor allem ist es dadurch möglich, die Schiebemutter einerseits sicher relativ zum Positionierbauteil zu positionieren und andererseits die Erhebung beim Eindrehen einer Schraube in die Durchgangsöffnung der Schiebemutter aus der Durchgangsöffnung zu verdrängen.

In Weiterbildung der Erfindung gehen die Schlitze bis zum oberen, verjüngten Ende der Erhebung durch.

Auf diese Weise werden mehrere Materialstreifen gebildet, die bis zum oberen Ende der Erhebung durchgehen und die beispielsweise federnd ausgebildet werden können. Solche Materialstreifen lassen sich dann beim Eindrehen einer Schraube in die Durchgangsöffnung der Schiebemutter leicht aus der Durchgangsöffnung verdrängen. Das Positionierbauteil ist vorteilhafterweise aus Kunststoff hergestellt, beispielsweise als einstückiges Kunststoffspritzgussteil.

In Weiterbildung der Erfindung weist das Oberteil wenigstens einen zylindrischen Vorsprung auf und die Haltescheibe weist eine zu dem Vorsprung passende Durchgangsöffnung auf, wobei der Vorsprung sich durch die Durchgangsöffnung hindurcherstreckt.

Auf diese Weise kann die Haltescheibe relativ zum Positionierbauteil sicher gehalten und korrekt positioniert werden. Schiebemutter und Haltescheibe sind dadurch am Positionierbauteil gesichert und die Befestigungsvorrichtung kann problemlos in die Öffnung einer Halteschiene eingesetzt und dann um 90° relativ zur Halteschiene gedreht werden.

In Weiterbildung der Erfindung ist der wenigstens eine Vorsprung im Bereich seines freien Endes mit einem radial nach außen abragenden Rastvorsprung versehen.

Auf diese Weise kann die Haltescheibe an dem zylindrischen Vorsprung gehalten werden und beispielsweise kann die Haltescheibe durch einfaches Aufdrücken auf den zylindrischen Vorsprung an dem Vorsprung gesichert werden. Die Haltescheibe wird einfach auf den zylindrischen Vorsprung aufgesetzt, bis sich der zylindrische Vorsprung durch die Durchgangsöffnung in der Haltescheibe hindurcherstreckt und die Rastvorsprünge über die Oberseite der Haltescheibe schnappen.

In Weiterbildung der Erfindung ist der wenigstens eine Vorsprung hohlzylindrisch ausgebildet.

Dies spart zum einen Material und kann zum anderen sicherstellen, dass das Positionierbauteil mit im Wesentlichen konstanter Wandstärke ausgeführt werden kann, was bei der Herstellung mittels Kunststoffspritzguss vorteilhaft ist.

In Weiterbildung der Erfindung ist der wenigstens eine Vorsprung zweiteilig ausgebildet, wobei ein erster Teil des Vorsprungs mit dem ersten Abschnitt des Oberteils verbunden ist und ein zweiter Teil des Vorsprungs mit dem zweiten Abschnitt des Oberteils verbunden ist.

Auf diese Weise kann ein zylindrischer Vorsprung als Kunststoffspritzgussteil ohne Hinterschnitte ausgebildet werden, da der zylindrische Vorsprung aus zwei Teilen mit jeweils halbkreisförmigem Querschnitt zusammengesetzt wird.

In Weiterbildung der Erfindung ist der wenigstens eine Vorsprung hohlzylindrisch ausgebildet und ein Fixierbauteil ist in das offene Ende des Vorsprungs eingedrückt.

Auf den hohlzylindrischen Vorsprung wird die Haltescheibe aufgedrückt, bis sich der Vorsprung durch eine Durchgangsöffnung in der Haltescheibe hindurcherstreckt. In dieser Position können Haltescheibe und Positionierbauteil dann dadurch gesichert werden, dass ein Fixierbauteil in das offene Ende des Vorsprungs eingedrückt wird.

In Weiterbildung der Erfindung ist der wenigstens eine Vorsprung im Bereich seines freien Endes mit wenigstens einem radial nach innen abragenden Rastvorsprung versehen.

Ein solcher, radial nach innen abragender Rastvorsprung dient zum Arretieren des Fixierbauteils, wenn dieses in das offene Ende des Vorsprungs eingedrückt ist.

In Weiterbildung der Erfindung ist das Fixierelement kugelförmig ausgebildet.

Ein kugelförmiges Fixierelement erleichtert das Eindrücken in den hohlzylindrischen Vorsprung, da die Ausrichtung des Fixierelements dann im Wesentlichen beliebig ist. Im eingedrückten Zustand kann das kugelförmige Fixierelement dann durch den Rastvorsprung, der im Bereich des freien Endes des hohlzylindrischen Vorsprungs nach innen abragt, gesichert werden.

In Weiterbildung der Erfindung ist das Fixierelement mittels eines dünnen Stegs oder eines Filmscharniers mit dem Vorsprung verbunden.

Dadurch kann das Fixierelement einstückig mit dem Positionierbauteil hergestellt werden, beispielsweise als Kunststoffspritzgussteil. Der dünne Steg oder das Filmscharnier sind dabei so flexibel, dass das Fixierelement nicht notwendigerweise von dem übrigen Positionierbauteil getrennt werden muss, um es in den hohlzylindrischen Vorsprung einzudrücken.

Bei einer Anordnung mit einer Befestigungsvorrichtung und einer Halteschiene mit wenigstens abschnittsweise C-artigem Querschnitt ist die Schiebemutter innerhalb des C-artigen Querschnitts angeordnet und die Haltescheibe liegt auf einer Öffnung des C-artigen Querschnitts auf.

In Weiterbildung der Erfindung weist das Positionierbauteil wenigstens eine Bremseinrichtung auf und die wenigstens eine Bremseinrichtung des Positionierbauteils liegt an der Halteschiene an, um die Befestigungsvorrichtung gegen Herausfallen und Verrutschen relativ zur Halteschiene zu sichern.

Mittels einer Bremsvorrichtung kann erreicht werden, dass nach dem Einsetzen der Befestigungsvorrichtung in die Halteschiene, aber vor dem Verspannen der Haltescheibe und der Schiebemutter gegen die Abschnitte der Halteschiene, die die Öffnung der Halteschiene begrenzen, die Befestigungsvorrichtung nicht innerhalb der Halteschiene verrutscht. Dies kann sehr wichtig sein, wenn die Halteschienen beispielsweise in vertikaler Richtung an einer Wand angeordnet werden. Die Befestigungsvorrichtungen können dann relativ zur Halteschiene vorpositioniert werden, bis eine Schraube oder ein sonstiges Gewindebauteil in die Schiebemutter der Befestigungsvorrichtung eingedreht wird.

In Weiterbildung der Erfindung ist die wenigstens eine Bremseinrichtung als v-förmig verlaufender Materialstreifen ausgebildet, dessen Spitze an der Halteschiene anliegt.

Ein solcher v-förmig verlaufender Materialstreifen kann einstückig mit dem Positionierbauteil hergestellt werden, beispielsweise mittels Kunststoffspritzguss.

In Weiterbildung der Erfindung ist ein Bauteil mit Außengewinde, insbesondere eine Schraube oder eine Gewindestange, wenigstens abschnittsweise in eine Durchgangsöffnung der Schiebemutter eingeschraubt.

Mittels einer solchen Schraube oder Gewindestange können dann Funktionsteile, beispielsweise Rohrschellen, Winkel oder dergleichen, an der Schiebemutter und damit an der Halteschiene fixiert und gesichert werden.

Bei einem Verfahren zum Herstellen einer Befestigungsvorrichtung ist das Herstellen des Positionierbauteils als einstückiges Kunststoffteil, das Anordnen der Schiebemutter relativ zu dem Positionierbauteil so, dass sich die Erhebung auf der Basis des Positionierbauteils abschnittsweise in die Durchgangsöffnung der Schiebemutter hineinerstreckt oder auf einer der Basis abgewandten Oberseite der Erhebung aufliegt, das Abbiegen der Seitenteile des Positionierbauteils relativ zur Basis, so dass die Seitenteile abschnittsweise an Seitenflächen der Schiebemutter anliegen, und das Verbinden der beiden Abschnitte des Oberteils des Positionierbauteils mittels der Rastelemente vorgesehen, so dass das Positionierbauteil die Schiebemutter wenigstens abschnittsweise umschließt.

In sehr einfacher Weise kann dadurch die Schiebemutter relativ zum Positionierbauteil angeordnet und gesichert werden. Indem das Positionierbauteil die Schiebemutter wenigstens abschnittsweise umschließt, kann verhindert werden, dass die Schiebemutter aus dem Positionierbauteil herausfällt. Das Anordnen der Schiebemutter relativ zu dem Positionierbauteil, das Abbiegen der Seitenteile des Positionierbauteils und das Verbinden der beiden Abschnitte des Oberteils des Positionierbauteils kann dabei vollautomatisch und damit in sehr großen Stückzahlen und kostengünstig erfolgen.

In Weiterbildung der Erfindung weist das Oberteil wenigstens einen zylindrischen Vorsprung auf und die Haltescheibe weist eine zu dem Vorsprung passende Durchgangsöffnung auf, wobei das Aufsetzen der Haltescheibe auf das Positionierbauteil vorgesehen ist, so dass sich der wenigstens eine Vorsprung am Oberteil des Positionierbauteils durch die Durchgangsöffnung in der Haltescheibe hindurcherstreckt.

Die Haltescheibe kann dadurch in einfacher Weise auf das Positionierbauteil aufgesetzt werden, dies kann beispielsweise auch vollautomatisch erfolgen.

In Weiterbildung der Erfindung ist der wenigstens eine Vorsprung hohlzylindrisch ausgebildet und es ist ein Fixierbauteil vorgesehen, wobei das Eindrücken des Fixierbauteils in den wenigstens einen hohlzylindrischen Vorsprung erfolgt.

Auf diese Weise kann die Haltescheibe an dem Positionierbauteil gesichert werden. Durch Eindrücken des Fixierbauteils wird der hohlzylindrische Vorsprung entweder aufgeweitet oder in seiner Ausdehnung fixiert. Die Haltescheibe kann dann nicht mehr von dem hohlzylindrischen Vorsprung abgezogen werden.

In Weiterbildung der Erfindung ist das vollautomatische Anordnen der Schiebemutter relativ zu dem Positionierbauteil, das vollautomatische Abbiegen der Seitenteile des Positionierbauteils relativ zu der Basis und das vollautomatische Verbinden der beiden Abschnitte des Oberteils des Positionierbauteils mittels der Rastelemente vorgesehen.

Auch das Aufsetzen der Haltescheibe auf das Positionierbauteil kann vollautomatisch erfolgen.

Das Eindrücken des Fixierbauteils in den hohlzylindrischen Vorsprung kann ebenfalls vollautomatisch erfolgen.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine Ansicht einer erfindungsgemäßen Anordnung mit einer Befestigungsvorrichtung und einer Halteschiene mit C-artigem Querschnitt von schräg vorne,
- Fig. 2: die Anordnung der Fig. 1 vor dem Einsetzen der Befestigungsvorrichtung in die Halteschiene,
- Fig. 3: eine abschnittsweise Darstellung der Anordnung der Fig. 1 nach dem Einsetzen der Befestigungsschiene in die Halteschiene und vor dem Verdrehen der Befestigungsvorrichtung relativ zur Halteschiene,
- Fig. 4: die Anordnung der Fig. 1 nach dem Einsetzen und Verdrehen der Befestigungsvorrichtung relativ zur Halteschiene,
- Fig. 5: eine Schnittansicht der Anordnung der Fig. 1,
- Fig. 6: eine Ansicht eines Positionierbauteils der erfindungsgemäßen Befestigungsvorrichtung von schräg oben,
- Fig. 7: das Positionierbauteil und eine Schiebemutter der erfindungsgemäßen Befestigungsvorrichtung,
- Fig. 8: das Positionierbauteil der Fig. 7 mit einem hochgeklappten Seitenteil,
- Fig. 9: das Positionierbauteil der Fig. 7 und Fig. 8 mit zwei hochgeklappten Seitenteilen,
- Fig. 10: das Positionierbauteil und die Schiebemutter der Fig. 9 mit aufgesetzter Haltescheibe,
- Fig. 11: eine Schnittansicht der Befestigungsvorrichtung der Fig. 10 und
- Fig. 12: eine Schnittansicht einer Befestigungsvorrichtung gemäß einer weiteren Ausführungsform der Erfindung.

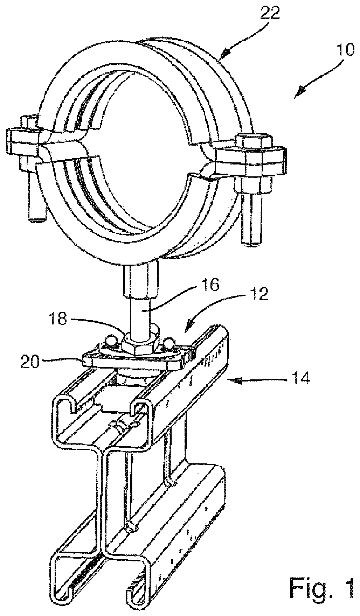

Fig. 1 zeigt eine erfindungsgemäße Anordnung 10 mit einer Befestigungsvorrichtung 12, die in eine Halteschiene 14 mit abschnittsweise C-artigem Querschnitt eingesetzt ist. Die Halteschiene 14 weist zwei Abschnitte mit jeweils C-artigem Querschnitt auf. Betrachtet wird im Folgenden lediglich der in Fig. 1 obere Abschnitt mit C-artigem Querschnitt. Die Befestigungsvorrichtung 12 könnte aber beispielsweise auch in den unteren Abschnitt mit C-artigem Querschnitt eingesetzt werden.

Bei der Anordnung 10 ist eine Gewindestange 16 in die Befestigungsvorrichtung 12 eingeschraubt. Auf der Gewindestange 16 ist eine Kontermutter 18 angeordnet. Die Gewindestange 16 erstreckt sich in eine Durchgangsöffnung mit Innengewinde in einer Schiebemutter der Befestigungsvorrichtung 12 hinein, die in Fig. 1 nicht zu erkennen ist. Mittels der Kontermutter 18 wird eine Haltescheibe 20 der Befestigungsvorrichtung 12 von oben her gegen Abschnitte der Halteschiene 14 gedrückt, die die Öffnung der Halteschiene 14 seitlich begrenzen, und gleichzeitig wird mittels der Gewindestange 16 die Schiebemutter der Befestigungsvorrichtung 12 von unten her gegen die Abschnitte der Halteschiene 14 gezogen, die die Öffnung der Halteschiene 14 seitlich begrenzen. Die Gewindestange 16 ist dadurch relativ zur Halteschiene fixiert und gesichert. Die Halteschiene kann in konventioneller Weise beispielsweise an einer Wand oder einem sonstigen Träger angeordnet sein.

An dem, der Befestigungsvorrichtung 12 gegenüberliegenden Ende der Gewindestange 16 ist eine Rohrschelle 22 aufgeschraubt.

Vor dem Anziehen der Kontermutter 18 kann die Befestigungsvorrichtung 12 in Längsrichtung der Halteschiene 14 verschoben werden. Eine nicht dargestellte Bremsvorrichtung an der Befestigungsvorrichtung 12 sorgt dafür, dass die Befestigungsvorrichtung 12 nicht der Schwerkraft folgend entlang der Halteschiene 14 rutscht. Wenn die Befestigungsvorrichtung 12 in der gewünschten Position entlang der Halteschiene 14 angeordnet ist, wird die Kontermutter 18 gegen die Haltescheibe 20 vorgespannt und die Befestigungsvorrichtung 12 dadurch relativ zur Halteschiene 14 fixiert und gesichert.

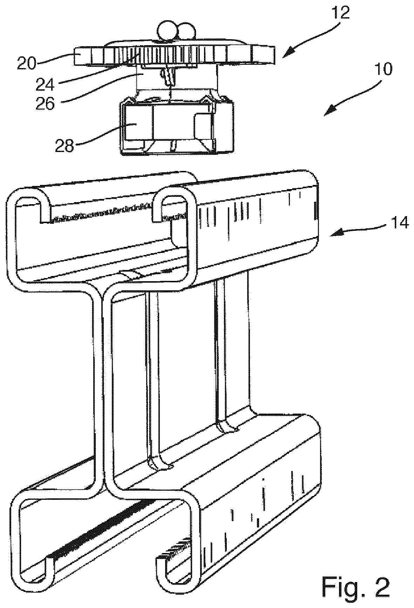

Fig. 2 zeigt die Anordnung 10 der Fig. 1 vor dem Einsetzen der Befestigungsvorrichtung 12 in die Halteschiene 14. Die Befestigungsvorrichtung 12 ist gegenüber der Position der Fig. 1 um 90° verdreht. Dies ist beispielsweise dadurch zu erkennen, dass eine Riffelung 24 an der in Fig. 2 vorne liegenden Seitenkante der Haltescheibe 20 in Fig. 1 seitlich und damit gegenüber Fig. 2 um 90° verdreht angeordnet ist.

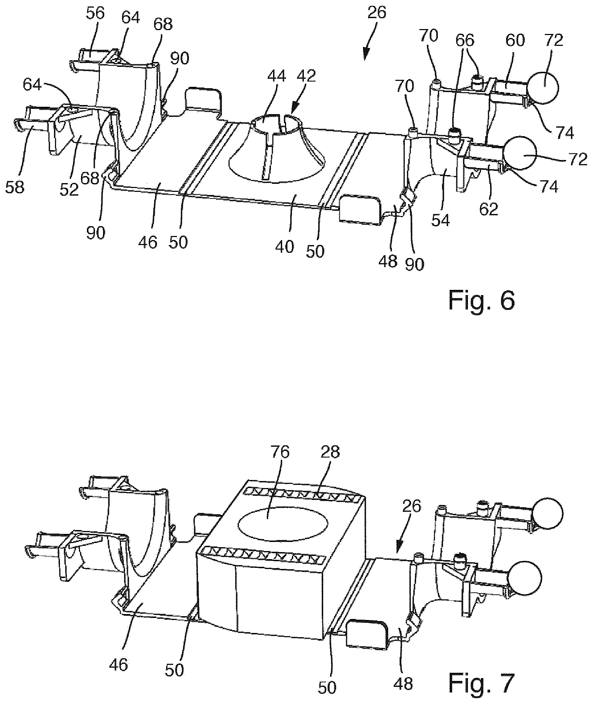

Fig. 2 lässt an der Befestigungsvorrichtung 12 ein Positionierbauteil 26 erkennen, das bei der dargestellten Ausführungsform aus Kunststoff besteht und das eine Schiebemutter 28 abschnittsweise umgibt. Die Schiebemutter 28 weist eine in Fig. 2 nicht erkennbare Durchgangsöffnung mit Innengewinde auf, in die dann die Gewindestange 16 eingeschraubt wird. Die Schiebemutter 28 ist mit rechteckförmigem Querschnitt mit zwei abgerundeten Ecken, siehe auch Fig. 7, ausgeführt und kann in der in Fig. 2 dargestellten Position nach unten in den oberen Abschnitt der Halteschiene 14 mit C-artigem Querschnitt eingesetzt werden. Die Schiebemutter 28 einschließlich der Seitenteile des Positionierbauteils 26, die an den Seitenflächen der Schiebemutter 28 anliegen, sind etwas weniger breit als die Öffnung der Halteschiene 14. Ausgehend vom Zustand der Fig. 2 kann die Befestigungsvorrichtung 12 also nach unten in die Halteschiene 14 eingesetzt werden, bis eine Unterseite der Haltescheibe 20 auf der Oberseite der Abschnitte der Halteschiene 14 aufliegt, die die Öffnung der Halteschiene 14 seitlich begrenzen.

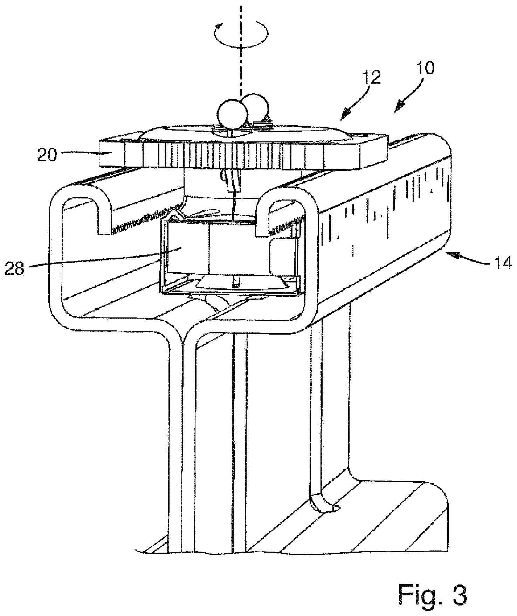

Dieser Zustand ist in der Darstellung der Fig. 3 dargestellt. Die Schiebemutter 28 ist nun innerhalb des oberen Abschnitts mit C-artigem Querschnitt der Halteschiene 14 angeordnet und die Haltescheibe 20 liegt auf der Oberseite der Halteschiene 14 auf. Ausgehend vom Zustand der Fig. 3 kann die Befestigungsvorrichtung 12 nun um 90° verdreht werden, wie in Fig. 3 angedeutet ist. Aufgrund des rechteckigen Querschnitts der Schiebemutter 28 hintergreift die Schiebemutter nach dem Verdrehen die Abschnitte der Halteschiene 14, die die Öffnung der Halteschiene 14 begrenzen.

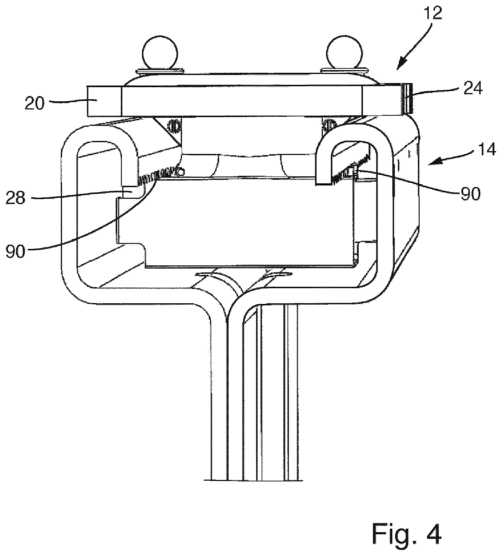

Dieser Zustand ist in Fig. 4 dargestellt. Die Befestigungsvorrichtung 12 wurde nun um 90° gedreht, was beispielsweise daran zu erkennen ist, dass die in Fig. 3 hinten liegende Riffelung 24 der Haltescheibe 20 nun rechts angeordnet ist. Die Schiebemutter 28 liegt nun abschnittsweise unterhalb der Abschnitte der Halteschiene 14, die die Öffnung der Haltescheibe begrenzen. Werden nun die Schiebemutter 28 und die Haltescheibe 20 aufeinander zubewegt, was mittels der Gewindestange 16 und der Kontermutter 18 aus Fig. 1 erfolgen kann, wird die Befestigungsvorrichtung 12 sicher an der Halteschiene 14 festgeklemmt.

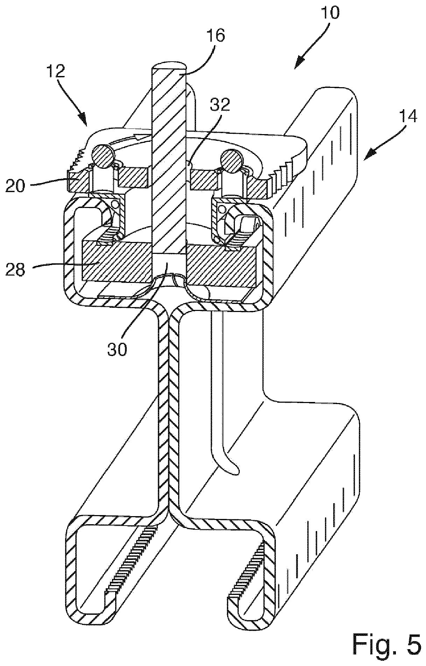

Fig. 5 zeigt eine abschnittsweise Schnittansicht der Anordnung 10 der Fig. 1. Die Gewindestange 16 ist in eine Durchgangsöffnung 30 der Schiebemutter 28 eingeschraubt, wobei die Durchgangsöffnung 30 mit einem Innengewinde versehen ist. Die Gewindestange 16 erstreckt sich auch durch eine mittige Durchgangsöffnung 32 in der Haltescheibe 20 hindurch. Die Kontermutter 18 ist in Fig. 5 nicht dargestellt. Durch Verdrehen der Kontermutter auf der Gewindestange 16 kann einerseits die Haltescheibe 20 nach unten gedrückt werden und andererseits kann die Gewindestange 16 nach oben gezogen werden, so dass die Abschnitte der Halteschiene 14, die die Öffnung der Halteschiene 14 seitlich begrenzen, zwischen der Schiebemutter 28 und der Haltescheibe 20 eingeklemmt werden. Dadurch kann die Befestigungsvorrichtung 12 an der Halteschiene 14 gesichert werden.

Fig. 6 zeigt das Positionierbauteil 26 der Befestigungsvorrichtung 12 vor der Montage. In dem Zustand der Fig. 6 wird das Positionierbauteil 26 aus einem Kunststoffspritzgusswerkzeug entnommen. Das Positionierbauteil 26 kann im Wesentlichen ohne Hinterschnitte als Kunststoffspritzgussteil in großen Stückzahlen und dadurch sehr kostengünstig hergestellt werden. Das Positionierbauteil 26 besteht aus einem Kunststoff, der elastisch verformbar ist, wie nachfolgend noch erläutert werden wird.

Das Positionierbauteil 26 weist eine Basis 40 auf. Einstückig mit der Basis 40 verbunden ist eine kegelstumpfartige Erhebung 42. Die Erhebung 42 besteht aus vier durch Schlitze voneinander getrennten Materialstreifen 44. Die kegelstumpfartige Erhebung 42 weist eine konkave Außenkontur auf. Die Erhebung ist innen hohl. Die Erhebung 42 ist dafür vorgesehen, sich ein Stück weit in die Durchgangsöffnung der Schiebemutter 28 hineinzuerstrecken und die Schiebemutter 28 relativ zur Basis 40 zu positionieren. Aufgrund der konkaven und kegelstumpfartigen Gestaltung der Erhebung 42 können auf der Erhebung Schiebemuttern mit unterschiedlich großer Durchgangsöffnung aufgesetzt werden. Schiebemuttern mit einer großen Durchgangsöffnung, beispielsweise einem M16-Innengewinde, sind dann näher an der Basis 40 angeordnet als Schiebemuttern mit einer kleinen Durchgangsöffnung, beispielsweise einem M6-Innengewinde. Schiebemuttern für sehr große Gewindestangen sind dicker ausgebildet als Schiebemuttern für kleine Gewindestangen oder Schrauben. Aufgrund der Gestaltung der Erhebung 42 kann eine Oberseite der Schiebemuttern aber dennoch immer auf der gleichen Höhe gehalten werden, was nachfolgend noch erläutert wird.

Das Positionierbauteil 26 weist ein erstes Seitenteil 46 und ein zweites Seitenteil 48 auf. Die beiden Seitenteile 46, 48 sind mit gegenüberliegenden Seitenkanten der Basis 40 verbunden. Eine Verbindung zwischen dem ersten Seitenteil 46 und der Basis 40 sowie zwischen dem zweiten Seitenteil 48 und der Basis 40 wird jeweils mittels eines Filmscharniers 50 gebildet. Im Bereich des Filmscharniers 50 weist das Positionierbauteil 26 eine gegenüber der Basis 40 und den Seitenteilen 46, 48 deutlich verringerte Wandstärke auf. Im Bereich der Filmscharniere 50 kann daher das Positionierbauteil 26 abgebogen werden, ohne dass das Filmscharnier 50 bricht.

Anschließend an das erste Seitenteil 46 und gegenüber der Basis 40 ist das erste Seitenteil 46 mit einem ersten Abschnitt 52 eines Oberteils des Positionierbauteils 26 verbunden. Symmetrisch hierzu ist das zweite Seitenteil 48 mit einem zweiten Abschnitt 54 des Oberteils des Positionierbauteils 26 verbunden.

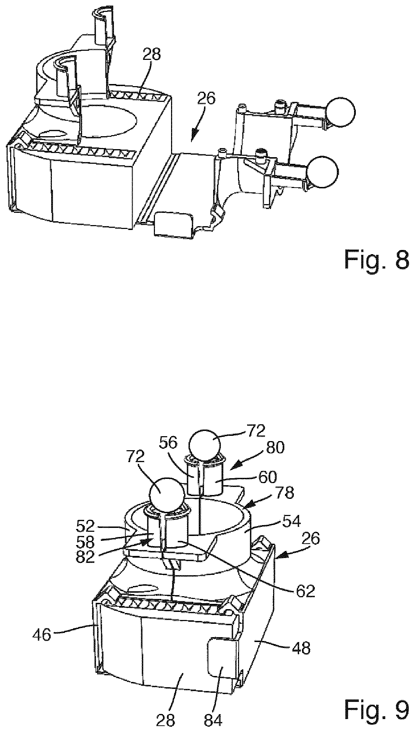

Die beiden Abschnitte 52, 54 weisen jeweils einen halbkreiszylindrisch ausgebildeten Abschnitt auf, durch den sich im montierten Zustand eine Schraube oder Gewindestange erstrecken kann, wobei sich an diesen halbkreiszylindrischen Abschnitt zwei jeweils halbkreiszylindrische Teile 56, 58 bzw. 60, 62 anschließen. Die beiden Abschnitte 52, 54 sind dabei nicht identisch. Der in Fig. 6 links dargestellte erste Abschnitt 52 weist Rastöffnungen 64 auf, die seitlich des halbkreiszylindrischen Abschnitts angeordnet sind. Der in Fig. 6 rechte Abschnitt 54 weist Rastvorsprünge 66 auf, die passend zu den Rastöffnungen 64 ausgebildet sind und im zusammengesetzten Zustand, siehe Fig. 9, in die Rastöffnungen 64 einrasten können.

Der in Fig. 6 links dargestellte erste Abschnitt 52 ist darüber hinaus mit Positionieröffnungen 68 versehen, in die Positionierzapfen 70 am in Fig. 6 rechts dargestellten zweiten Abschnitt 54 eingreifen können.

Der in Fig. 6 rechts dargestellte zweite Abschnitt 54 ist darüber hinaus mit zwei kugelförmigen Fixierelementen 72 versehen. Diese Fixierelemente 72 sind mittels dünner Stege 74 an die zweiten Teile 60, 62 angespritzt. Die Fixierelemente 72 können dadurch relativ zu den Teilen 60, 62 bewegt werden.

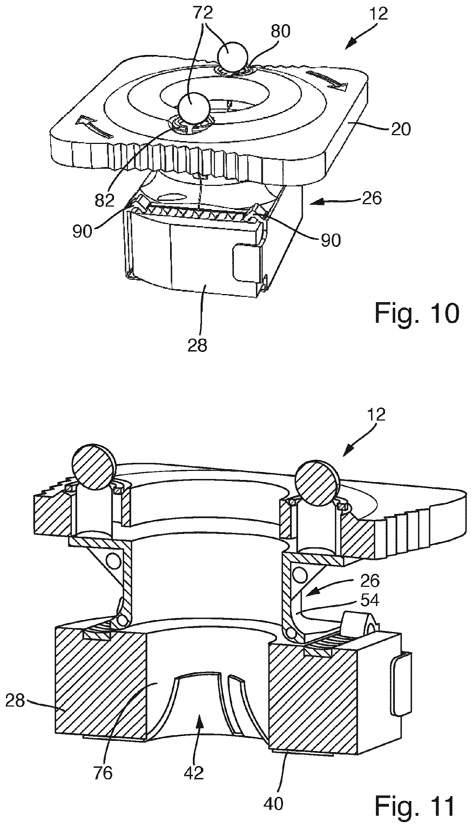

In Fig. 6 ist weiter zu erkennen, dass das erste Seitenteil 46 und das zweite Seitenteil 48 jeweils mit v-artig gebogenen Materialstreifen 90 versehen sind. Diese v-artig gebogenen Materialstreifen 90 bilden eine Bremsvorrichtung und sind im fertiggestellten Zustand der Befestigungsvorrichtung 12, siehe Fig. 10, auf einer Oberseite der Schiebemutter 28 angeordnet. Wenn die Befestigungsvorrichtung 12 in die Halteschiene 14 eingesetzt und um 90° verdreht wurde, wie dies in Fig. 1 und Fig. 4 dargestellt ist, drücken die Materialstreifen 90 gegen eine Unterseite der Abschnitte der Halteschiene 14, die die Öffnung der Halteschiene 40 seitlich begrenzen. Diese Unterseite weist, siehe Fig. 4, eine geriffelte Ausbildung auf. Die Spitzen der v-artig gebogenen Materialstreifen 90 können dann in Vertiefungen dieser Riffelung eingreifen. Auch ohne dass die Haltescheibe 20 und die Schiebemutter 28 gegen die Abschnitte der Halteschiene 14 vorgespannt sind, die die Öffnung der Halteschiene 14 seitlich begrenzen, ist die Befestigungsvorrichtung 12 dadurch so in der Halteschiene 14 gesichert, dass sie nicht selbsttätig, beispielsweise aufgrund der Schwerkraft, verrutschen kann. Dennoch kann die Befestigungsvorrichtung 12 dann durch leichten Druck entlang der Halteschiene 14 verschoben werden. Die v-artig gebogenen Materialstreifen 90, die die Bremsvorrichtung bilden, können dann entlang der Riffelung bewegt werden und greifen in der vorgesehenen Endposition dann wieder in eine Vertiefung der Riffelung ein. Im Rahmen der Erfindung können die Materialstreifen 90 beispielsweise auch bogenförmig ausgebildet sein oder nach Art einer Blattfeder mit einem zu der Riffelung passenden Vorsprung.

Gemäß Fig. 7 wird die Schiebemutter 28 so auf die Basis 40 des Positionierbauteils 26 aufgesetzt, dass sich die Erhebung 42, siehe Fig. 6, ein Stück weit in eine Durchgangsbohrung 76 der Schiebemutter 28 mit Innengewinde hineinerstreckt, und dass die langen Seitenflächen der Schiebemutter 28 parallel zu den Seitenkanten der Basis 40 bzw. parallel zu den Filmscharnieren 50 verlaufen. Durch einfaches Aufsetzen der Schiebemutter auf das Positionierbauteil 26 kann die Schiebemutter 28 dadurch relativ zum Positionierbauteil 26 positioniert werden.

Ausgehend vom Zustand der Fig. 7 wird dann das in Fig. 7 linke Seitenteil 46 relativ zur Basis 40 um 90° nach oben abgebogen, bis der Zustand der Fig. 8 erreicht ist.

Gleichzeitig oder nachfolgend kann das zweite Seitenteil 48 ebenfalls um 90° nach oben abgebogen werden, bis der Zustand der Fig. 9 erreicht ist. Im Zustand der Fig. 9 sind die Rastvorsprünge 66, siehe Fig. 6, bereits in die Rastöffnungen 64 eingesetzt worden und die Positionierzapfen 70 sind in die Positionieröffnungen 68 eingesetzt worden. Es ist dadurch aus dem ersten Abschnitt 52 und dem zweiten Abschnitt 54 nun das Oberteil 78 gebildet. Es ist zu erkennen, dass das Oberteil 78 eine zentrale Durchgangsöffnung bildet, durch die die Gewindestange 16 eingesteckt und in die Durchgangsöffnung 76 der Schiebemutter 28 eingeschraubt werden kann.

Weiter weist das Oberteil einen ersten hohlzylindrischen Vorsprung 80 und einen zweiten hohlzylindrischen Vorsprung 82 auf. Der erste hohlzylindrische Vorsprung 80 ist durch die Teile 60, 56 gebildet und der zweite hohlzylindrische Vorsprung ist durch die Teile 62, 58 gebildet. Die kugelförmigen Fixierelemente 72 befinden sich nun oberhalb der hohlzylindrischen Vorsprünge 80, 82 und können, wie noch erläutert werden wird, in die hohlzylindrischen Vorsprünge 80, 82 eingedrückt werden.

Die Schiebemutter 28 wird in Fig. 9 seitlich, also nach rechts und nach links, mittels des ersten Seitenteils 46 und mittels des zweiten Seitenteils 48 gehalten. In einer Richtung senkrecht hierzu, also in Fig. 9 von links unten nach rechts oben, wird eine Verschiebung der Schiebemutter 28 relativ zum Positionierbauteil 26 durch einen Haltevorsprung 84 am zweiten Seitenteil 48 bzw. einen in Fig. 9 nicht erkennbaren Haltevorsprung am ersten Seitenteil 46 verhindert. Darüber hinaus erstreckt sich, wie erläutert wurde, die Erhebung 42 an der Basis des Positionierbauteils 26 ein Stück weit in die Durchgangsöffnung 76 der Schiebemutter 28 und verhindert dadurch auch ein Verrutschen der Schiebemutter 28 relativ zum Positionierbauteil 26.

Ausgehend von dem in Fig. 9 dargestellten Zustand wird nun die Haltescheibe 20 auf die hohlzylindrischen Vorsprünge 82, 80 aufgeschoben, bis sich die hohlzylindrischen Vorsprünge 80, 82 durch passende Durchgangsöffnungen in der Haltescheibe 20 hindurcherstrecken. Dies ist in Fig. 10 dargestellt. In diesem Zustand übergreifen an den freien Enden der hohlzylindrischen Vorsprünge 80, 82 angeordnete Rastvorsprünge, die sich radial nach außen erstrecken, die Haltescheibe 20. Die Haltescheibe 20 ist dadurch bereits in der in Fig. 10 dargestellten Position gesichert.

Die kugelförmigen Fixierelemente 72 werden nun ausgehend vom Zustand der Fig. 10 nach unten in die hohlzylindrischen Vorsprünge 80, 82 eingedrückt. Am freien Ende der hohlzylindrischen Vorsprünge 80, 82 sind jeweils radial nach innen erstreckte Rastvorsprünge angeordnet. Die Fixierelemente 72 werden so weit in die hohlzylindrischen Vorsprünge 80, 82 eingedrückt, bis die Fixierelemente 72 unterhalb dieser Rastelemente angeordnet sind. Die Fixierelemente 72 können dadurch nicht selbsttätig wieder aus den hohlzylindrischen Vorsprüngen 80, 82 herausgelangen. Die beiden Teile des hohlzylindrischen Vorsprungs 80 und des hohlzylindrischen Vorsprungs 82 werden dadurch in Fig. 10 nach rechts bzw. links weggedrückt und sichern dadurch die Haltescheibe 20 zuverlässig am Positionierbauteil 26.

Nach dem Eindrücken der Fixierelemente 72 in die hohlzylindrischen Vorsprünge 80, 82 ist die Befestigungsvorrichtung 12 fertiggestellt und kann in eine Halteschiene 14 eingesetzt werden.

Die anhand der Fig. 6 bis 10 beschriebene Herstellung der Befestigungsvorrichtung 12 kann dabei vollautomatisch erfolgen. Es wurde ausgeführt, dass das Positionierbauteil 26 im Zustand der Fig. 6 aus einem Spritzgusswerkzeug entnommen werden kann. Die Herstellung der Befestigungsvorrichtung 12 ist dadurch in äußerst kostengünstiger Weise in großen Stückzahlen möglich.

Fig. 11 zeigt eine Schnittansicht der Befestigungsvorrichtung 12 der Fig. 10. In dieser Ansicht ist zu erkennen, dass sich die Erhebung 42 auf der Basis 40 des Positionierbauteils 26 ein Stück weit in die Durchgangsöffnung 76 der Schiebemutter 28 hineinerstreckt und die Schiebemutter 28 dadurch relativ zur Basis 40 positioniert. Die Schiebemutter 28 ist dabei so dick, dass die Unterseite auf der Basis 40 aufliegt und die Oberseite an der Unterseite des zweiten Abschnitts 54 des Oberteils des Positionierbauteils 26 anliegt.

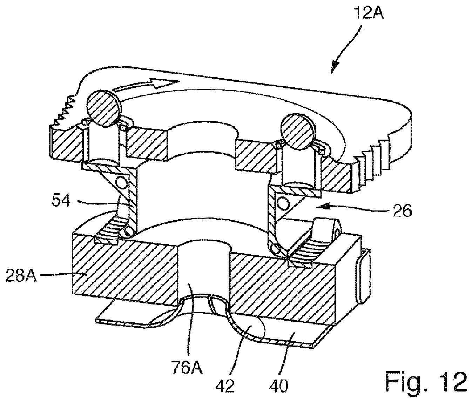

Fig. 12 zeigt eine Befestigungsvorrichtung 12A, die im Unterschied zur Befestigungsvorrichtung 12 der Fig. 11 mit einer Schiebemutter 28A versehen ist, die eine kleinere Durchgangsöffnung 76A aufweist. Beispielsweise weist die Schiebemutter 28A eine Durchgangsöffnung 76A mit M6-Innengewinde auf und die Schiebemutter 28 weist eine Durchgangsöffnung 76 mit einem M16-Innengewinde auf. Die Schiebemutter 28A ist auch dünner als die Schiebemutter 28. Die Erhebung 42 erstreckt sich ein Stück weit in die Durchgangsöffnung 76A der Schiebemutter 28A hinein. Aufgrund des kleineren Durchmessers der Durchgangsöffnung 76A der Schiebemutter 28A wird die Schiebemutter 28A aber ein Stück weit oberhalb der Basis 40 des Positionierbauteils 26 gehalten. Dies deshalb, da die Schiebemutter 28A entlang der konkaven Außenkontur der Erhebung 42 nicht so weit herunterrutschen kann wie die Schiebemutter 28. Auch die gegenüber der Schiebemutter 28 dünnere Schiebemutter 28A wird also so gehalten, dass ihre Oberseite an dem ersten Abschnitt 54 des Oberteils des Positionierbauteils 26 anliegt.

## Patentansprüche

1. Befestigungsvorrichtung (12) für Halteschienen (14) mit wenigstens abschnittsweise C-artigem Querschnitt, mit einer Schiebemutter (28, 28A), einer Haltescheibe (20) und einem Positionierbauteil (26), wobei das Positionierbauteil (26) die Schiebemutter (28, 28A) wenigstens abschnittsweise umgreift und das Positionierbauteil (26) die Haltescheibe (20) in einem Abstand von der Schiebemutter (28) hält, wobei das Positionierbauteil (26) eine Basis (40) aufweist, die gegenüber einer Unterseite der Schiebemutter (28) angeordnet ist, dass das Positionierbauteil (26) ein erstes Seitenteil (46) und ein zweites Seitenteil (48) aufweist, wobei das erste Seitenteil (46) und das zweite Seitenteil (48) mit der Basis (40) verbunden sind und wenigstens abschnittsweise an gegenüberliegenden Seitenflächen der Schiebemutter (28) anliegen, dass das Positionierbauteil (26) ein Oberteil (78) aufweist, das gegenüber einer Oberseite der Schiebemutter (28) angeordnet ist, wobei das Oberteil (78) wenigstens einen ersten Abschnitt (52) und einem zweiten Abschnitt (54) aufweist, wobei der erste Abschnitt (52) mit dem ersten Seitenteil (46) und der zweite Abschnitt (54) mit dem zweiten Seitenteil (48) verbunden ist und wobei der erste Abschnitt (52) und der zweite Abschnitt (54) mittels Rastmitteln (66, 64) miteinander verbunden sind.

2. Befestigungsvorrichtung nach Anspruch 1, **dadurch gekennzeichnet, dass** das erste Seitenteil (46) und die Basis (40) mittels eines ersten Filmscharniers (50) miteinander verbunden sind und dass das zweite Seitenteil (48) und die Basis (40) mittels eines zweiten Filmscharniers (50) miteinander verbunden sind.

3. Befestigungsvorrichtung nach Anspruch 1 oder 2, **dadurch gekennzeichnet, dass** die Basis (40) auf ihrer der Schiebemutter (28, 28A) zugewandten Innenseite mit einer kegelstumpfartigen Erhebung (42) versehen ist, die abschnittsweise in eine Durchgangsöffnung (76, 76A) in der Schiebemutter (28, 28A) eingreift, wobei insbesondere die Erhebung (42) eine konkave Außenkontur aufweist, wobei insbesondere die Erhebung (42) mit einer Mittelöffnung versehen ist.

4. Befestigungsvorrichtung nach Anspruch 3, **dadurch gekennzeichnet, dass** die Erhebung (42) aus mehreren Materialstreifen (44) besteht, die jeweils mit der Basis (40) verbunden sind und die mittels Schlitzen wenigstens abschnittsweise voneinander getrennt sind, wobei insbesondere die Schlitze bis zum oberen, verjüngten Ende der Erhebung (42) durchgehen.

5. Befestigungsvorrichtung nach wenigstens einem der vorstehenden Ansprüche, **dadurch gekennzeichnet, dass** das Oberteil (78) wenigstens einen zylindrischen Vorsprung (80, 82) aufweist und dass die Haltescheibe (20) eine zu dem Vorsprung passende Durchgangsöffnung aufweist, wobei der Vorsprung (80, 82) sich durch die Durchgangsöffnung hindurcherstreckt, wobei insbesondere der wenigstens eine Vorsprung (80, 82) im Bereich seines freien Endes mit einem radial nach außen abragenden Rastvorsprung versehen ist, wobei insbesondere der wenigstens eine Vorsprung (80, 82) hohlzylindrisch ausgebildet ist, wobei insbesondere der wenigstens eine Vorsprung (80, 82) zweiteilig ausgebildet ist, wobei ein erster Teil (56, 58) des Vorsprungs (80, 82) mit dem ersten Abschnitt (52) des Oberteils (78) verbunden ist und ein zweiter Teil (60, 62) des Vorsprungs (80, 82) mit dem zweiten Abschnitt (54) des Oberteils (78) verbunden ist.

6. Befestigungsvorrichtung nach Anspruch 5, **dadurch gekennzeichnet, dass** der wenigstens eine Vorsprung (80, 82) hohlzylindrisch ausgebildet ist und dass ein Fixierbauteil (72) in das offene Ende des Vorsprungs (80, 82) eingedrückt ist, wobei insbesondere der wenigstens eine Vorsprung (80, 82) im Bereich seines freien Endes mit wenigstens einem radial nach innen abragenden Rastvorsprung versehen ist, wobei insbesondere das Fixierelement (72) kugelförmig ausgebildet ist, wobei insbesondere das Fixierelement (72) mittels eines dünnen Stegs oder eines Filmscharniers mit dem Vorsprung (80, 82) verbunden ist.

7. Anordnung mit einer Befestigungsvorrichtung (12) nach wenigstens einem der vorstehenden Ansprüche und einer Halteschiene (14) mit wenigstens abschnittsweise C-artigem Querschnitt, wobei die Schiebemutter (28, 28A) innerhalb des C-artigen Querschnitts angeordnet ist und die Haltescheibe (20) auf einer Öffnung des C-artigen Querschnitts aufliegt.

8. Anordnung nach Anspruch 7, **dadurch gekennzeichnet, dass** das Postionierbauteil (26) wenigstens eine Bremseinrichtung (90) aufweist und dass die wenigstens eine Bremseinrichtung (90) des Positionierbauteils (26) an der Halteschiene (14) anliegt, um die Befestigungsvorrichtung (12) gegen Herausfallen und Verrutschen relativ zur Halteschiene (14) zu sichern.

9. Anordnung nach Anspruch 8, **dadurch gekennzeichnet, dass** die wenigstens eine Bremseinrichtung als v-förmig verlaufender Materialstreifen (90) ausgebildet ist, dessen Spitze an der Halteschiene (14) anliegt.

10. Anordnung nach Anspruch 7, 8 oder 9, **dadurch gekennzeichnet, dass** ein Bauteil mit Außengewinde, insbesondere eine Schraube oder eine Gewindestange (16), wenigstens abschnittsweise in eine Durchgangsöffnung (76, 76A) der Schiebemutter (28, 28A) eingeschraubt ist.

11. Verfahren zum Herstellen einer Befestigungsvorrichtung (12) nach wenigstens einem der vorstehenden Ansprüche 1 bis 6, **gekennzeichnet durch** Herstellen des Positionierbauteils (26) als einstückiges Kunststoffteil, Anordnen der Schiebemutter (28, 28A) relativ zu dem Positionierbauteil (26) so, dass sich die Erhebung (42) auf der Basis (40) des Positionierbauteils (26) abschnittsweise in die Durchgangsöffnung (76, 76A) der Schiebemutter (28, 28A) hineinerstreckt oder auf einer der Basis (40) abgewandten Oberseite der Erhebung (42) aufliegt, Abbiegen der Seitenteile (46, 48) des Positionierbauteils (26) relativ zur Basis (40), so dass die Seitenteile (46, 48) abschnittsweise an Seitenflächen der Schiebemutter (28, 28A) anliegen, Verbinden der beiden Abschnitte (52, 54) des Oberteils (78) des Positionierbauteils (26) mittels der Rastelemente (66, 64), so dass das Positionierbauteil (26) die Schiebemutter (28, 28A) wenigstens abschnittsweise umschließt.

12. Verfahren nach Anspruch 11, wobei das Oberteil (78) wenigstens einen zylindrischen Vorsprung (80, 82) aufweist und wobei die Haltescheibe (20) eine zu dem Vorsprung (80, 82) passende Durchgangsöffnung aufweist, **gekennzeichnet durch** Aufsetzen der Haltescheibe (20) auf das Positionierbauteil (26), so dass sich der wenigstens eine Vorsprung (80, 82) am Oberteil (78) des Positionierbauteils (26) durch die Durchgangsöffnung in der Haltescheibe (20) hindurch erstreckt, wobei insbesondere der wenigstens eine Vorsprung (80, 82) hohlzylindrisch ausgebildet ist und ein Fixierbauteil (72) vorgesehen ist, insbesondere **gekennzeichnet durch** Eindrücken des Fixierbauteils (72) in den wenigstens einen hohlzylindrischen Vorsprung (80, 82).

13. Verfahren nach Anspruch 11 oder 12, **gekennzeichnet durch** vollautomatisches Anordnen der Schiebemutter (28, 28A) relativ zu dem Positionierbauteil (26), vollautomatisches Abbiegen der Seitenteile(46, 48) des Positionierbauteils (26) relativ zu der Basis (40) und vollautomatisches Verbinden der beiden Abschnitt (52, 54) des Oberteils (78) des Positionierbauteils (26) mittels der Rastelemente 64, 66).

14. Verfahren nach Anspruch 13, **gekennzeichnet durch** vollautomatisches Aufsetzen der Haltescheibe (20) auf das Positionierbauteil (26).

15. Verfahren nach Anspruch 13 oder 14, **gekennzeichnet durch** vollautomatisches Eindrücken des Fixierbauteils (72) in den hohlzylindrischen Vorsprung (80, 82).

## Claims

1. Fastening device (12) for holding rails (14) with C-like cross section at least in certain portions, having a sliding nut (28, 28A), a holding disc (20) and a positioning component (26), wherein the positioning component (26) at least partially engages around the sliding nut (28, 28A), and the positioning component (26) holds the holding disc (20) at a distance from the sliding nut (28), wherein the positioning component (26) has a base (40) which is arranged opposite a lower side of the sliding nut (28), wherein the positioning component (26) has a first side part (46) and a second side part (48), wherein the first side part (46) and the second side part (48) are connected to the base (40) and at least partially bear against opposite side faces of the sliding nut (28), wherein the positioning component (26) has an upper part (78) which is arranged opposite an upper side of the sliding nut (28), wherein the upper part (78) has at least a first portion (52) and a second portion (54), wherein the first portion (52) is connected to the first side part (46), and the second portion (54) is connected to the second side part (48), and wherein the first portion (52) and the second portion (54) are connected to one another by means of latching means (66, 64).

2. Fastening device according to Claim 1, **characterized in that** the first side part (46) and the base (40) are connected to one another by means of a first film hinge (50), and **in that** the second side part (48) and the base (40) are connected to one another by means of a second film hinge (50).

3. Fastening device according to Claim 1 or 2, **characterized in that** the base (40) is provided, on its inner side facing the sliding nut (28, 28A), with a frustoconical elevation (42) which partially engages in a through-opening (76, 76A) in the sliding nut (28, 28A), wherein in particular the elevation (42) has a concave outer contour, wherein in particular the elevation (42) is provided with a central opening.

4. Fastening device according to Claim 3, **characterized in that** the elevation (42) consists of a plurality of material strips (44) which are each connected to the base (40) and which are separated from one another, at least in certain portions, by means of slots, wherein in particular the slots pass through up to the upper, tapered end of the elevation (42).

5. Fastening device according to at least one of the preceding claims, **characterized in that** the upper part (78) has at least one cylindrical projection (80, 82), and **in that** the holding disc (20) has a through-opening corresponding to the projection, wherein the projection (80, 82) extends through the through-opening, wherein in particular the at least one projection (80, 82) is provided, in the region of its free end, with a radially outwardly protruding latching projection, wherein in particular the at least one projection (80, 82) is hollow-cylindrical, wherein in particular the at least one projection (80, 82) is formed in two parts, wherein a first part (56, 58) of the projection (80, 82) is connected to the first portion (52) of the upper part (78), and a second part (60, 62) of the projection (80, 82) is connected to the second portion (54) of the upper part (78).

6. Fastening device according to Claim 5, **characterized in that** the at least one projection (80, 82) is hollow-cylindrical, and **in that** a fixing component (72) is pressed into the open end of the projection (80, 82), wherein in particular the at least one projection (80, 82) is provided, in the region of its free end, with at least one radially inwardly protruding latching projection, wherein in particular the fixing element (72) is spherical, wherein in particular the fixing element (72) is connected to the projection (80, 82) by means of a thin web or a film hinge.

7. Arrangement having a fastening device (12) according to at least one of the preceding claims and a holding rail (14) with C-like cross section at least in certain portions, wherein the sliding nut (28, 28A) is arranged within the C-like cross section, and the holding disc (20) lies on an opening of the C-like cross section.

8. Arrangement according to Claim 7, **characterized in that** the positioning component (26) has at least one braking device (90), and **in that** the at least one braking device (90) of the positioning component (26) bears against the holding rail (14) in order to secure the fastening device (12) against falling out and slipping relative to the holding rail (14).

9. Arrangement according to Claim 8, **characterized in that** the at least one braking device takes the form of a material strip (90) which extends in a v shape and whose tip bears against the holding rail (14).

10. Arrangement according to Claim 7, 8 or 9, **characterized in that** a component having an external thread, in particular a screw or a threaded rod (16), is at least partially screwed into a through-opening (76, 76A) in the sliding nut (28, 28A).

11. Method for producing a fastening device (12) according to at least one of the preceding Claims 1 to 6, **characterized by** producing the positioning component (26) as a one-piece plastics part, arranging the sliding nut (28, 28A) relative to the positioning component (26) such that the elevation (42) on the base (40) of the positioning component (26) partially extends into the through-opening (76, 76A) in the sliding nut (28, 28A) or lies on an upper side of the elevation (42) facing away from the base (40), bending the side parts (46, 48) of the positioning component (26) relative to the base (40) such that the side parts (46, 48) partially bear against side faces of the sliding nut (28, 28A), and connecting the two portions (52, 54) of the upper part (78) of the positioning component (26) by means of the latching elements (66, 64) such that the positioning component (26) at least partially encloses the sliding nut (28, 28A).

12. Method according to Claim 11, wherein the upper part (78) has at least one cylindrical projection (80, 82), and wherein the holding disc (20) has a through-opening corresponding to the projection (80, 82), **characterized by** placing the holding disc (20) on the positioning component (26) such that the at least one projection (80, 82) on the upper part (78) of the positioning component (26) extends through the through-opening in the holding disc (20), wherein in particular the at least one projection (80, 82) is hollow-cylindrical and a fixing component (72) is provided, in particular **characterized by** pressing the fixing component (72) into the at least one hollow-cylindrical projection (80, 82).

13. Method according to Claim 11 or 12, **characterized by** fully automatic arrangement of the sliding nut (28, 28A) relative to the positioning component (26), fully automatic bending of the side parts (46, 48) of the positioning component (26) relative to the base (40), and fully automatic connection of the two portions (52, 54) of the upper part (78) of the positioning component (26) by means of the latching elements (64, 66).

14. Method according to Claim 13, **characterized by** fully automatic placing of the holding disc (20) on the positioning component (26).

15. Method according to Claim 13 or 14, **characterized by** fully automatic pressing of the fixing component (72) into the hollow-cylindrical projection (80, 82).

## Revendications

1. Dispositif de fixation (12) pour des rails de maintien (14) avec une section transversale au moins en partie en forme de C, avec un écrou coulissant (28, 28A), un disque de retenue (20) et un élément de positionnement (26), l'élément de positionnement (26) entourant au moins partiellement l'écrou coulissant (28, 28A) et l'élément de positionnement (26) maintenant le disque de retenue (20) à distance de l'écrou coulissant (28), l'élément de positionnement (26) présentant une base (40) qui est agencée à l'opposé d'une face inférieure de l'écrou coulissant (28), l'élément de positionnement (26) présentant une première partie latérale (46) et une deuxième partie latérale (48), la première partie latérale (46) et la deuxième partie latérale (48) étant reliées à la base (40) et reposant au moins partiellement sur des surfaces latérales opposées de l'écrou coulissant (28), l'élément de positionnement (26) présentant une partie supérieure (78) qui est agencée en regard d'une face supérieure de l'écrou coulissant (28), la partie supérieure (78) comprenant au moins une première section (52) et une deuxième section (54), la première section (52) étant reliée à la première partie latérale (46) et la deuxième section (54) étant reliée à la deuxième partie latérale (48), et la première section (52) et la deuxième section (54) étant reliées l'une à l'autre par des moyens d'encliquetage (66, 64).

2. Dispositif de fixation selon la revendication 1, **caractérisé en ce que** la première partie latérale (46) et la base (40) sont reliées l'une à l'autre au moyen d'une première charnière-film (50) et **en ce que** la deuxième partie latérale (48) et la base (40) sont reliées l'une à l'autre au moyen d'une deuxième charnière-film (50).

3. Dispositif de fixation selon la revendication 1 ou la revendication 2, **caractérisé en ce que** la base (40) est pourvue, sur sa face intérieure tournée vers l'écrou coulissant (28, 28A), d'une protubérance tronconique (42) qui s'engage partiellement dans une ouverture de passage (76, 76A) dans l'écrou coulissant (28, 28A), la protubérance (42) présentant en particulier un contour extérieur concave, la protubérance (42) étant en particulier pourvue d'une ouverture centrale.

4. Dispositif de fixation selon la revendication 3, **caractérisé en ce que** la protubérance (42) est constituée de plusieurs bandes de matériau (44) qui sont chacune reliées à la base (40) et qui sont séparées les unes des autres au moins partiellement au moyen de fentes, les fentes s'étendant notamment jusqu'à l'extrémité supérieure effilée de la protubérance (42).

5. Dispositif de fixation selon au moins l'une des revendications précédentes, **caractérisé en ce que** la partie supérieure (78) présente au moins une saillie cylindrique (80, 82) et **en ce que** le disque de retenue (20) présente une ouverture de passage adaptée à la saillie, la saillie (80, 82) s'étendant à travers l'ouverture de passage, ladite au moins une saillie (80, 82) étant notamment pourvue, dans la zone de son extrémité libre, d'une saillie d'encliquetage dépassant radialement vers l'extérieur, ladite au moins une saillie (80, 82) étant en particulier réalisée sous forme de cylindre creux, ladite au moins une saillie (80, 82) étant en particulier réalisée en deux parties, une première partie (56, 58) de la saillie (80, 82) étant reliée à la première section (52) de la partie supérieure (78) et une deuxième partie (60, 62) de la saillie (80, 82) étant reliée à la deuxième section (54) de la partie supérieure (78).

6. Dispositif de fixation selon la revendication 5, **caractérisé en ce que** ladite au moins une saillie (80, 82) est de forme cylindrique creuse et **en ce qu'**un élément de fixation (72) est enfoncé dans l'extrémité ouverte de la saillie (80, 82), ladite au moins une saillie (80, 82) est pourvue, dans la zone de son extrémité libre, d'au moins une saillie d'encliquetage faisant saillie radialement vers l'intérieur, l'élément de fixation (72) étant notamment de forme sphérique, l'élément de fixation (72) étant notamment relié à la saillie (80, 82) au moyen d'une mince barrette ou d'une charnière-film.

7. Agencement avec un dispositif de fixation (12) selon au moins l'une des revendications précédentes et un rail de retenue (14) avec une section transversale au moins partiellement en forme de C, l'écrou coulissant (28, 28A) étant agencé à l'intérieur de la section transversale en forme de C et le disque de retenue (20) reposant sur une ouverture de la section transversale en forme de C.

8. Agencement selon la revendication 7, **caractérisé en ce que** l'élément de positionnement (26) comporte au moins un dispositif de freinage (90) et **en ce que** ledit au moins un dispositif de freinage (90) de l'élément de positionnement (26) est en appui contre le rail de maintien (14) de façon à empêcher le dispositif de fixation (12) de tomber et de glisser par rapport au rail de maintien (14).

9. Agencement selon la revendication 8, **caractérisé en ce que** ledit au moins un dispositif de freinage est réalisé sous la forme d'une bande de matériau (90) s'étendant en forme de V, dont la pointe est en appui sur le rail de maintien (14).

10. Agencement selon la revendication 7, 8 ou 9, **caractérisé en ce qu'**un composant avec un filetage extérieur, en particulier une vis ou une tige filetée (16), est vissé au moins partiellement dans une ouverture de passage (76, 76A) de l'écrou coulissant (28, 28A).

11. Procédé de fabrication d'un dispositif de fixation (12) selon au moins l'une des revendications 1 à 6 cidessus, **caractérisé par** le fait de fabriquer l'élément de positionnement (26) sous la forme d'une pièce en matière plastique monobloc, le fait de positionner l'écrou coulissant (28, 28A) par rapport à l'élément de positionnement (26) de telle sorte que la protubérance (42) sur la base (40) de l'élément de positionnement (26) s'étend partiellement dans l'ouverture de passage (76, 76A) de l'écrou coulissant (28, 28A) ou repose sur une face supérieure de la protubérance (42) opposée à la base (40), le fait de plier les parties latérales (46, 48) de l'élément de positionnement (26) par rapport à la base (40), de sorte que les parties latérales (46, 48) reposent partiellement sur des surfaces latérales de l'écrou coulissant (28, 28A), le fait de relier les deux sections (52, 54) de la partie supérieure (78) de l'élément de positionnement (26) au moyen des éléments d'encliquetage (66, 64), de sorte que l'élément de positionnement (26) entoure l'écrou coulissant (28, 28A) au moins partiellement.

12. Procédé selon la revendication 11, dans lequel la partie supérieure (78) présente au moins une saillie cylindrique (80, 82) et dans lequel le disque de retenue (20) présente une ouverture de passage adaptée à la saillie (80, 82), **caractérisé par** le fait de mettre en place le disque de retenue (20) sur l'élément de positionnement (26), de sorte que ladite au moins une saillie (80, 82) sur la partie supérieure (78) de l'élément de positionnement (26) s'étende à travers l'ouverture de passage dans le disque de retenue (20), ladite au moins une saillie (80, 82) étant en particulier de forme cylindrique creuse et un élément de fixation (72) étant prévu, caractérisé en particulier par le fait d'enfoncer l'élément de fixation (72) dans ladite au moins une saillie cylindrique creuse (80, 82).

13. Procédé selon la revendication 11 ou la revendication 12, **caractérisé par** le fait de positionner entièrement automatiquement l'écrou coulissant (28, 28A) par rapport à l'élément de positionnement (26), le fait de plier entièrement automatiquement les parties latérales (46, 48) de l'élément de positionnement (26) par rapport à la base (40) et le fait d'assembler entièrement automatiquement les deux parties (52, 54) de la partie supérieure (78) de l'élément de positionnement (26) au moyen des éléments d'encliquetage (64, 66).

14. Procédé selon la revendication 13, **caractérisé par** le fait de mettre en place entièrement automatiquement le disque de retenue (20) sur l'élément de positionnement (26) .

15. Procédé selon la revendication 13 ou la revendication 14, **caractérisé par** le fait d'enfoncer entièrement automatiquement l'élément de fixation (72) dans la saillie cylindrique creuse (80, 82).
